# EUROPÄISCHE PATENTSCHRIFT

(11) **EP 3 829 974 B1**
(45) Veröffentlichungstag und Bekanntmachung des Hinweises auf die Patenterteilung: **13.09.2023**
(21) Anmeldenummer: 19746040.5
(22) Anmeldetag: 18.07.2019
(51) Int. Cl.: B63H 21/22, G01C 21/20, B63J 99/00

(54) **VERFAHREN ZUR EVALUIERUNG DES FLACHWASSEREINFLUSSES**
METHOD FOR EVALUATING SHALLOW WATER INFLUENCE
PROCÉDÉ D'ÉVALUATION DE L'INFLUENCE D'EAUX PEU PROFONDES

(30) Priorität: 31.07.2018 DE 102018118496
(43) Veröffentlichungstag der Anmeldung: 09.06.2021
(73) Patentinhaber: Schottel GmbH, 56322 Spay/Rhein (DE)
(72) Erfinder: MERTES, Paul, 56754 Roes (DE)
(74) Vertreter: Wagner Albiger & Partner Patentanwälte mbB
(86) Internationale Anmeldenummer: PCT/EP2019/069341
(87) Internationale Veröffentlichungsnummer: WO 2020/025336

(56) Entgegenhaltungen:
- EP-A1- 3 042 843
- WO-A1-2006/136157
- DE-A1- 3 230 621
- DE-A1-102008 032 394
- Arno Bons ET AL: "EconomyPlanner; optimal use of inland waterways", , 12. September 2014 (2014-09-12), XP055623369, Budapest, Hungary Gefunden im Internet: URL:https://www.deltares.nl/app/uploads/20 15/02/paper-optimal-use-of-inland-waterway s.pdf [gefunden am 2019-09-18]

## Beschreibung

Die Erfindung betrifft ein Verfahren zur Evaluierung des Flachwassereinflusses auf ein mit einer Antriebsleistung angetriebenes Motorschiff.

Im regelmäßigen Schiffsverkehr bestimmt der Schiffsführer die zu fahrende Route eines Motorschiffes und gibt die Leistung der installierten Antriebsanlage vor. Die Leistung der Antriebs- bzw. Propulsionsanlagen wird durch Wahl der Propellerdrehzahl und/oder Steigung der Propeller vorgegeben. Hierbei obliegt es dem Schiffsführer, die Betriebsbedingungen, wie Wassertiefe, Strömungsverhältnisse, Windlasten, lokales Verkehrsaufkommen richtig einzuschätzen und entsprechend die Leistung der Propulsionsanlagen in Abhängigkeit von der terminierten Zielankunft einzustellen.

Kanalfahrt, Flussfahrt und Flachwasser werden unter dem Sammelbegriff "beschränkte Fahrwasser" zusammengefasst. Von Flachwasser spricht der Fachmann, wenn das Fahrwasser in vertikaler Richtung, also unterhalb des Schiffsrumpfes beschränkt ist. Auch die seitliche Beschränkung des Fahrwassers, wie bei Flüssen oder Kanälen, bringt oft gleichzeitig eine Limitierung des Fahrwassers nach unten mit sich.

Als Folge dieser Beschränkungen erhöht sich der Widerstand eines Motorschiffes signifikant. Die Ursachen dafür liegen in auftretenden Rückströmungen, dem Versperrungseffekt (Blockade) und in einer stärkeren Wellenbildung.

Aus der DE 10 2008 032 394 A1 ist es bekannt, die Soll-Schiffsgeschwindigkeit in Abhängigkeit von der Unterwassertopographie zu regeln.

Illies: Handbuch der Schiffsbetriebstechnik, 2. Auflage, Vieweg, Braunschweig 1984, S. 358f. ISBN 3-528-18249-0 und HARVALD: Resistance and Propulsion of Ships, John Wiley & Sons 1983, S. 76-81, ISBN 0-471-06353-3 beschreiben das Berechnungsmodell nach Schlichting & Lackenby zur Ermittlung des Geschwindigkeitsverlustes im Flachwasser.

Aus der WO 2006/136157 A1 ist ein maritimes Informationssystem zur Routenplanung von Schiffen bekannt, welches u.a. auch die durch Flachwassereinfluss eintretenden Geschwindigkeitsverluste eines Schiffes berücksichtigt.

Die Publikation von Arno Bons et al: "EconomyPlanner; optional use of inland waterways", 12. September 2014 (2014-09-12), XP055623369, Budapest, Hungary; gefunden im Internet URL:https://www.deltares.nl/app/uploads/2015/02/paper-optimal-use-of-inland-waterways.pdf [gefunden am 2019-09-18] beschreibt einen Zusammenhang zwischen Antriebsleistung und Geschwindigkeit eines Schiffes in Flachwasser und deren optimale Nutzung auf Basis eines aufwendigen Datenmodells, welches von einer Vielzahl miteinander vernetzter Schiffe in einem Rechenzentrum generiert wird.

Fehlende Erfahrung des Schiffsführers und/oder ungenaue Daten führen zu einem unkontrollierten Betrieb des Motorschiffes. Ein solcher unkontrollierter Betrieb auf beschränktem Fahrwasser verschwendet Energie und erzeugt zusätzliche Emissionen, ohne sich in tatsächlich schnellerer Fahrweise niederzuschlagen.

Aufgabe der Erfindung ist es daher, ein Verfahren zur Evaluierung des Flachwassereinflusses auf ein mit einer Antriebsleistung angetriebenes Motorschiff vorzuschlagen, welches auch bei einem weniger qualifizierten Schiffsführer eine effiziente Umsetzung der zur Verfügung stehenden Antriebsleistung in Vortrieb des Motorschiffes unter weitgehender Eliminierung des Flachwassereinflusses vorzuschlagen.

Zur Lösung der gestellten Aufgabe wird erfindungsgemäß ein Verfahren gemäß den Merkmalen des Patentanspruchs 1 vorgeschlagen.

Vorteilhafte Ausgestaltungen und Weiterbildungen der Erfindung sind Gegenstand der abhängigen Ansprüche.

Erfindungsgemäß wird die fortlaufende Abfolge der nachfolgend wiedergegebenen Schritte vorgeschlagen, um den Flachwassereinfluss zum Beispiel im Rahmen eines auf dem Motorschiff installierten Assistenzsystems zu evaluieren und zur Anzeige zu bringen oder aber im Rahmen einer automatisierten Steuerung der Antriebs- und/oder Rudereinrichtungen eine möglichst effiziente Fahrweise zu ermöglichen:
a) Ermittlung der an das Motorschiff angrenzenden Wassertiefe und einer aus der vorgegebenen Antriebsleistung erwarteten Sollgeschwindigkeit in tiefem Wasser;
b) Berechnung des erwarteten Geschwindigkeitsverlustes von der Sollgeschwindigkeit in Anhängigkeit von der ermittelten Wassertiefe;
c) Ermittlung der erforderlichen Leistungsdifferenz der Antriebsleistung, die zum Ausgleich des erwarteten Geschwindigkeitsverlustes erforderlich ist;
d) Anzeige des erwarteten Geschwindigkeitsverlustes und der erforderlichen Leistungsdifferenz auf einer Anzeigeeinrichtung, wobei das Verhältnis aus der erforderlichen Leistungsdifferenz zum erwarteten Geschwindigkeitsverlust berechnet und mit einem vorgebbaren Grenzwert verglichen wird und bei Unterschreiten des vorgebbaren Grenzwertes die Antriebsleistung des Motorschiffes und/oder dessen Geschwindigkeit erhöht werden kann und bei Überschreiten des vorgebbaren Grenzwertes die Erhöhung der Antriebsleistung und/oder der Geschwindigkeit verhindert wird..

Die im Schritt a) ermittelte erwartete Sollgeschwindigkeit in tiefem Wasser ist beispielsweise aus der schiffsspezifischen Propulsionskennlinie anhand des Leistungsbedarfs des Motorschiffes bei einem vorgegebenen Tiefgang für eine bestimmte Geschwindigkeit auf Tiefenwasser bekannt.

Die Quantifizierung des Flachwassereinflusses und des zu erwartenden Geschwindigkeitsverlustes in Abhängigkeit von der ermittelten Wassertiefe ist maßgeblich von der Geschwindigkeit und Formgestaltung des Motorschiffes im Unterwasserbereich und von der Topographie und Beschaffenheit des Gewässergrundes abhängig.

Nach einer Alternative des erfindungsgemäßen Verfahrens kann die sogenannte lineare Wellentheorie herangezogen werden, um zu beurteilen, ob für ein Motorschiff mit einem gegebenen Tiefgang T und einer Geschwindigkeit Vs auf einem Gewässer mit der Tiefe H Flachwasserbedingungen herrschen. Im Regelfall können mehrere Kriterien überprüft werden, um die Wassertiefenbedingungen in die Kategorien "Tiefwasser", "Übergangsbereich" und "Flachwasser" einzuordnen. Zur Bestimmung von Flachwasser werden vorzugsweise die folgenden Kriterien abgefragt:
- Bezug zwischen Wassertiefe H und Wellenlänge λ:
   Flachwasser, wenn H/λ < 1/25
- Bezug zwischen Wassertiefe H und Geschwindigkeit Vs des Motorschiffes über die Froudesche Tiefenzahl Fₙₕ [Trägheitskraft/Schwerkraft = (Geschwindigkeit des Wasserfahrzeuges/Geschwindigkeit der Schwerewellen)]
   Flachwasser, wenn Fₙₕ=Vs / (g*H)^{1/2} > x, wobei x=0,7
- Zusammenhang zwischen der Geschwindigkeit des Motorschiffes und der Wassertiefe über den Winkel der Bugwelle. Auf Tiefenwasser bildet sich bei Geschwindigkeiten bis Froude-Zahl Fₙ < 0,49 [=Vs / (g*L_{wl})^{1/2} = Fₙₕ] mit L_{wl} = Länge des Motorschiffes in der Wasserlinie) ein fester Winkel der Bugwelle aus. Dabei wird der halbe Öffnungswinkel der Bugwelle als Kelvin-Winkel bezeichnet:
   Flachwasser, wenn Kelvin-Winkel > 19,34°
- Verhältnis zwischen Tiefgang T, Wassertiefe H und Geschwindigkeit des Wasserfahrzeuges Vs
   Flachwasser, wenn 2,5 < H/T < 11
   extremes Flachwasser mit H/T < 2,5 muss gesondert betrachtet werden.
   Das Verhältnis Tiefgang T zu Wassertiefe H ist jedoch nicht aussagefähig genug, um Flachwasser festzustellen. In Verbindung mit der Froudeschen Tiefenzahl Fₙₕ lässt sich der Flachwassereinfluss jedoch genau eingrenzen.
- Aus der schiffsspezifischen Propulsionskennlinie ist bereits der Leistungsbedarf des Motorschiffes bei einem spezifischen Tiefgang für eine bestimmte Geschwindigkeit auf Tiefenwasser bekannt. Im Vergleich dazu lässt sich anhand des bei Fahrt zum Beispiel über entsprechende Sensoren ermittelten Leistungsbedarfs feststellen, ob Flachwasserbedingungen herrschen. Liegt der gemessene Leistungsbedarf unter Berücksichtigung einer Messgenauigkeit bei ansonsten gleichen Bedingungen (zum Beispiel trimm, Tiefgang, Wind, Windangriffsfläche und Strömung) über der Prognose, so muss von einem signifikanten Flachwassereinfluss ausgegangen werden.

Neben einer theoretischen Betrachtung ist auch eine Erfassung der Veränderung der Betriebsparameter im laufenden Betrieb zur Bestimmung des Flachwassereinflusses möglich. Diese Erfassung kann genutzt werden, um das System nach des dem Prinzip des "Machine Learning" zu trainieren und ein spezifisches Vorhersagemodell zu erzeugen.

Insofern beruht das erfindungsgemäße Verfahren darauf, fortlaufend anhand einer der vorangehend erläuterten Kriterien oder einer Kombination derselben festzustellen, ob überhaupt Flachwasserbedingungen vorliegen.

Sollte dies der Fall sein, wird beispielsweise aus dem Verfahren nach Schlichting & Lackenby zur Ermittlung der Froudeschen Tiefenzahl der erwartete Geschwindigkeitsverlust von der Sollgeschwindigkeit in Abhängigkeit von der ermittelten Wassertiefe berechnet.

Hierbei kann zur Erreichung maximaler Genauigkeit zu jedem Verhältnis von Wassertiefe zu Tiefgang der erwartete Geschwindigkeitsverlust berechnet werden, wobei jedoch bei vielen Binnenschiffsanwendungen eine Tiefgangsänderung nicht so groß ausfällt, sodass bereits mit einer einzigen Kurve ausreichende Genauigkeit erreicht wird. Für drei signifikant auseinanderliegende Tiefgänge ergibt sich eine Bandbreite bzw. eine Kurvenschar.

Sodann kann für die aktuell vorliegende Geschwindigkeit über den im vorausgegangenen Schritt berechneten erwarteten Geschwindigkeitsverlust von der Sollgeschwindigkeit die erforderliche Leistungsdifferenz der Antriebsleistung ermittelt werden, die zum Ausgleich des erwarteten Geschwindigkeitsverlustes erforderlich wäre.

Der solchermaßen ermittelte erwartete Geschwindigkeitsverlust und die erforderliche Leistungsdifferenz werden anschließend im einfachsten Fall auf einer geeigneten Anzeigeeinrichtung zum Beispiel auf der Brücke des Motorschiffes dargestellt und insoweit dem Schiffsführer zur Kenntnis gebracht. In einer Ausführung der Erfindung zeigt sodann eine detaillierte Darstellung dem Schiffsführer die erzielbare Leistungsveränderung in Abhängigkeit der Geschwindigkeitsveränderung als Prognose über einen Bereich der Geschwindigkeitsänderung.

Ausgehend von dieser Anzeige kann der Schiffsführer in Abstimmung mit dem Fahrplan, dem Schiffsverkehr und der Route entscheiden, ob er zur Erhöhung der Effizienz die Fahrgeschwindigkeit erniedrigen bzw. erhöhen möchte oder ob durch eine Kurskorrektur der Flachwassereinfluss verringert werden soll, um die Effizienz der eingesetzten Antriebsleistung in Bezug auf die realisierbare Geschwindigkeit des Motorschiffes zu steigern.

Nach einem Vorschlag der Erfindung kann eine Datenbank bereitgestellt werden, in der zu einer vorbestimmbaren Anzahl von Wassertiefen und Tiefgängen des Motorschiffes der erwartete Geschwindigkeitsverlust in Abhängigkeit von der erwarteten Sollgeschwindigkeit hinterlegt und als Berechnung des erwarteten Geschwindigkeitsverlustes ausgelesen und angezeigt wird.

Eine solche Datenbank kann beispielsweise in einem Strömungsmodell oder auch durch Messfahrten des konkreten Wasserfahrzeuges mit unterschiedlichen Tiefgängen, unterschiedlichen Geschwindigkeiten und unterschiedlich starkem Flachwassereinfluss erzeugt werden.

In der internen Datenbank können beispielsweise fixe schiffsspezifische Daten, wie die Hauptabmessungen des Schiffes L_{WL}, B_{WL,} Lₒₐ, die Hauptspantfläche, der Designtiefgang oder vorzugsweise eine schiffsspezifische Hydrostatiktabelle, eine theoretische Widerstands- oder Propulsionskurve und/oder ein Motorkennfeld hinterlegt werden.

Nach einem weiteren Vorschlag der Erfindung werden zur Berechnung des erwarteten Geschwindigkeitsverlustes auch betriebsspezifische Daten des Schiffes, enthaltend den aktuellen Tiefgang, die Wassertiefe, Strömungsgeschwindigkeit und Schiffsgeschwindigkeit relativ zur Strömung fortlaufend ermittelt und berücksichtigt. Optional kann auch noch das Wellenbild als Aufnahme mit einer Kamera und einer entsprechenden bildverarbeitenden Software zur Ermittlung des Kelvin-Winkels einfließen.

Die solchermaßen gebildete schiffsspezifische Datenbank kann auch durch theoretische Berechnungen erzeugt werden, alternativ ist es auch möglich, die Datenbasis durch ein lernendes System zu erzeugen und stetig zu verbessern.

Erfindungsgemäß wird zur Bewertung des Flachwassereinflusses das Verhältnis aus der erforderlichen Leistungsdifferenz zum erwarteten Geschwindigkeitsverlust berechnet und mit einem vorgebbaren Grenzwert verglichen werden, sodass bei Unterschreiten des vorgebbaren Grenzwertes die Antriebsleistung des Motorschiffes und/oder dessen Geschwindigkeit erhöht werden kann und bei Überschreiten des vorgebbaren Grenzwertes die Erhöhung der Antriebsleistung und/oder der Geschwindigkeit verhindert wird, indem entsprechende Eingriffe in die Steuerung des Motorschiffes zugelassen bzw. verhindert werden.

Neben der reinen Visualisierung der erforderlichen Leistungsdifferenz und des erwarteten Geschwindigkeitsverlustes ist es im Rahmen der Erfindung auch möglich, ein Assistenzsystem aufzubauen, welches in die automatische Steuerung und Regelung des Motorschiffes in Bezug auf dessen Antriebsleistung und oder dessen Kurs eingebunden ist.

Im einfachsten Fall führt ein solches System für festgelegte Bereiche von Wassertiefen aus den vorliegenden Eingangsdaten eine Betriebspunktoptimierung der Propulsion durch, visualisiert das Potenzial zur Leistungsoptimierung und der Schiffsführer wählt selbst die ihm am geeignetsten erscheinende Schiffsgeschwindigkeit.

Es ist jedoch auch möglich, dass ein solches System für festgelegte Bereiche von Wassertiefen aus den vorliegenden Eingangsdaten eine Betriebspunktoptimierung der Propulsion durchführt und diese in Stellbefehle der Propulsionsanlagen ausgibt. Die Geschwindigkeit des Motorschiffes wird damit automatisch geregelt, wobei die erforderliche Leistungsdifferenz minimiert wird.

Darüber hinaus kann das System bei einem bekannten Strömungs-und Wassertiefenprofil zum Beispiel aus entsprechenden bereitgestellten elektronischen Karten des gerade befahrenen Abschnittes die beste Position in der Fahrrinne bestimmen, sodass die Absolutgeschwindigkeit über Grund maximiert wird, d. h. der erwartete Geschwindigkeitsverlust minimiert wird oder auf einem vorgegebenen Kurs und einer vorgegebenen Fahrzeit ein Geschwindigkeitsprofil mit minimierter erforderliche Leistungsdifferenz berechnet wird, was mit einer Minimierung des Schadstoffausstoßes und/oder Kraftstoffverbrauchs einhergeht.

Ein solches System bietet insoweit eine vorausschauende Kontrolle der Schiffsgeschwindigkeit in Abhängigkeit von der terminierten Zielankunft und den Betriebsbedingungen, wie zum Beispiel Wassertiefe, Strömung, Windlasten usw. in einzelnen Streckenabschnitten des gesamten Kurses. Es sorgt automatisch für die Optimierung der Propellerdrehzahl und der Schiffsgeschwindigkeit unter Berücksichtigung der gewünschten Fahrzeit und der vorliegenden Wassertiefen. Aus der Vorgabe des Kurses und der gewünschten Ankunftszeit kann die erforderliche Schiffsgeschwindigkeit ermittelt werden. Die vorliegenden Informationen aus den Eingangsgrößen werden auf den Geschwindigkeitseinfluss bewertet und es wird ein Geschwindigkeitsprofil für den Kurs automatisch planbar. Die Planung des Geschwindigkeitsprofils kann laufend in vorgebbaren Zeitabständen aktualisiert werden.

Des Weiteren können auch die Verkehrs-oder Streckenbedingungen in die Berechnung einfließen. Füllstände der Brennstofftanks können auch in dem System verrechnet werden, wodurch eine automatische Restkraftprognose erstellt wird.

Die im Rahmen des erfindungsgemäßen Verfahrens zur Anwendung kommenden Eingangsgrößen umfassen die aktuelle Wassertiefe und den Tiefgang, die durch geeignete Sensorik an Bord des Motorschiffes erfasst und in ein entsprechendes, das Verfahren ausführendes Assistenzsystem gemeldet werden. Optional kann eine Kamera mit Auswerte-Software das Wellenbild aufzeichnen und den Kelvin-Winkel bestimmen und ebenfalls in das Assistenzsystem melden.

Von der Antriebsanlage werden die augenblicklichen Leistungsdaten durch Sensoren erfasst und zurückgemeldet. Die Leistungsdaten können durch verschiedene Parameter erfasst werden, je nachdem welche Sensorik auf dem Motorschiff installiert ist. Auch diese Leistungsdaten des augenblicklichen Betriebszustandes sowie des vorherrschenden Kraftstoffverbrauchs werden in das Assistenzsystem eingelesen.

Über das elektronische Navigationssystem, zum Beispiel ECDIS, können eine Kartendarstellung mit den Positionsdaten eines Satellitennavigationssystems und Informationen aus Radardaten und Echolotdaten eingelesen werden. Hieraus sind die Streckeninformationen, wie Länge des vorgegebenen Kurses, Geschwindigkeitslimits und Wassertiefen erkennbar, die dem Assistenzsystem zur Verfügung gestellt werden.

Die Schiffsgeschwindigkeit wird durch bordeigene Instrumente erfasst, wobei die augenblickliche Geschwindigkeit in das Assistenzsystem zurückgemeldet wird.

Die Propellerdrehzahl, gegebenenfalls bei einem Verstellpropeller die Propellersteigung und der Steuerwinkel sind ebenfalls durch entsprechende Sensoren ermittelbar und werden in das Assistenzsystem zurückgemeldet.

Sofern nicht ohnehin bereits im elektronischen Navigationssystem hinterlegt, können Positions- und Geschwindigkeitsinformationen aus einem Satellitennavigationssystem zur Verfügung gestellt werden.

Optional können auch aus externen Datenbanken Informationen über einzelne Streckenabschnitte abgerufen und dem Assistenzsystem zur Verfügung gestellt werden. Beispiele umfassen das Verkehrsaufkommen, die aktuelle Wassertiefe unter Strömungsprofil, Gefährdungen, zum Beispiel Havarien sowie lokale Wetterdaten, wie Wind, Windrichtung, Sichtweiten und Umweltzonen.

Hinzu kommen die in den bereitgestellten Datenbanken hinterlegten schiffsspezifischen Informationen, wie theoretische Propellerkennlinien (Schub, Leistung über Drehzahl) bei verschiedenen Tiefgängen; Wind- und Strömungswiderstände des Motorschiffes; Hauptabmessungen des Motorschiffes oder vorzugsweise die schiffsspezifische Hydrostatiktabelle; theoretische Widerstands- oder Propulsionskurve sowie optional ein Motorkennfeld.

Mit dem vorangehend beschriebenen Verfahren kann dem Schiffsführer ein Assistenzsystem zur Verfügung gestellt werden, welches die negativen Einflüsse von beschränkten Fahrwassern erfasst und meldet sowie die Propulsionsleistung in vorgegebenen Grenzen optimiert, um eine besonders wirtschaftliche Fahrweise einzustellen. Dabei können die bisherigen erfahrungsbasierten Kriterien berücksichtigt werden, aber auch neue messbare Größen in die Bewertung einfließen.

Für eine vorbestimmte Fahrtroute wird der Energieeinsatz für einzelne Streckenabschnitte unter Berücksichtigung der dort eventuell vorliegenden Flachwasserbedingungen berechnet und ein Fahrprofil geplant. Je nach Ausbaustufe kann ein solches Assistenzsystem auch automatisch die Propulsion ansteuern.

Eine solche Automation ist insbesondere im Bereich der Binnenschiffe mit weniger qualifizierten Personen an Bord sinnvoll, die nicht ohne weiteres in der Lage sind, das Schiff wirtschaftlich zu betreiben.

Das vorangehend erläuterte erfindungsgemäße Verfahren kann beispielsweise in einer Rechnereinheit an Bord des Schiffes in Form eines Computerprogrammes hinterlegt sein. Die solchermaßen programmierte Rechnereinheit kann entweder in das ohnehin vorhandene Automatisierungssystem des Motorschiffes integriert sein oder als separate Baugruppe vorgesehen sein und mit dem Automatisierungssystem kommunizieren.

## Patentansprüche

1. Verfahren zur Evaluierung des Flachwassereinflusses auf ein mit einer Antriebsleistung angetriebenes Motorschiff, umfassend die fortlaufende Abfolge der Schritte:
a) Ermittlung der an das Motorschiff angrenzenden Wassertiefe und einer aus der vorgegebenen Antriebsleistung erwarteten Sollgeschwindigkeit in tiefem Wasser;
b) Berechnung des erwarteten Geschwindigkeitsverlustes von der Sollgeschwindigkeit in Abhängigkeit von der ermittelten Wassertiefe;
c) Ermittlung der erforderlichen Leistungsdifferenz der Antriebsleistung, die zum Ausgleich des erwarteten Geschwindigkeitsverlustes erforderlich ist;
d) Anzeige des erwarteten Geschwindigkeitsverlustes und der erforderlichen Leistungsdifferenz auf einer Anzeigeeinrichtung, wobei das Verhältnis aus der erforderlichen Leistungsdifferenz zum erwarteten Geschwindigkeitsverlust berechnet und mit einem vorgebbaren Grenzwert verglichen wird und bei Unterschreiten des vorgebbaren Grenzwertes die Antriebsleistung des Motorschiffes und/oder dessen Geschwindigkeit erhöht werden kann und bei Überschreiten des vorgebbaren Grenzwertes die Erhöhung der Antriebsleistung und/oder der Geschwindigkeit verhindert wird..

2. Verfahren nach Anspruch 1, **dadurch gekennzeichnet, dass** eine Datenbank bereitgestellt wird, in der zu einer vorbestimmbaren Anzahl von Wassertiefen und Tiefgängen des Motorschiffes der erwartete Geschwindigkeitsverlust in Abhängigkeit von der erwarteten Sollgeschwindigkeit hinterlegt und als Berechnung des erwarteten Geschwindigkeitsverlustes ausgelesen und angezeigt wird.

3. Verfahren nach Anspruch 1, **dadurch gekennzeichnet, dass** zur Berechnung des erwarteten Geschwindigkeitsverlustes betriebsspezifische Daten des Schiffes, enthaltend den aktuellen Tiefgang, Wassertiefe, Strömungsgeschwindigkeit und Schiffsgeschwindigkeit relativ zur Strömung fortlaufend ermittelt und berücksichtigt werden.

4. Verfahren nach einem der Ansprüche 1 bis 3, **dadurch gekennzeichnet, dass** die aus der vorgegebenen Antriebsleistung erwartete Sollgeschwindigkeit in tiefem Wasser aus einer in einer Datenbank hinterlegten Propulsionskurve des Motorschiffes ermittelt wird.

5. Verfahren nach Anspruch 1, **dadurch gekennzeichnet, dass** zur Berechnung des erwarteten Geschwindigkeitsverlustes in Abhängigkeit von der ermittelten Wassertiefe gemäß Schritt b) die Froudesche Tiefenzahl des Motorschiffes, das Verhältnis zwischen Wassertiefe und einer am Bug des Motorschiffes ermittelten Wellenlänge, der Winkel der Bugwelle des Motorschiffes und/oder das Verhältnis zwischen Tiefgang und Wassertiefe des Motorschiffes ermittelt wird.

6. Verfahren nach einem der Ansprüche 1 bis 5, **dadurch gekennzeichnet, dass** in Abhängigkeit von der Wassertiefe die Geschwindigkeit des Motorschiffes selbsttätig geregelt wird, wobei die erforderliche Leistungsdifferenz minimiert wird.

7. Verfahren nach einem der Ansprüche 1 bis 6, **dadurch gekennzeichnet, dass** die Position des Motorschiffes ermittelt und aus einer bereitgestellten elektronischen Karte Strömungs- und Wassertiefenprofile eingelesen werden und ein Kurs des Motorschiffes berechnet wird, auf dem der erwartete Geschwindigkeitsverlust minimiert oder auf einem vorgegebenen Kurs und einer vorgegebenen Fahrzeit ein Geschwindigkeitsprofil mit minimierter erforderlicher Leistungsdifferenz berechnet wird.

## Claims

1. Method for evaluating the shallow water influence on a motor vessel, driven by drive power, comprising the continuous sequence of steps:
a) determining the water depth adjacent to the motor vessel and a setpoint speed in deep water that is expected from the predetermined drive power;
b) calculating the expected speed loss from the setpoint speed as a function of the determined water depth;
c) determining the necessary power difference of the drive power that is required to compensate for the expected speed loss;
d) displaying the expected speed loss and the required difference in power on a display apparatus, wherein the ratio of the required difference in power to the expected speed loss is calculated and compared with a predefinable limit value, and, if the predefinable limit value is undershot, the drive power of the motor vessel and/or its speed can be increased and when the predefinable limit value is exceeded, the increase in the drive power and/or the speed is prevented.

2. Method according to claim 1, **characterised in that** a database is provided in which the expected speed loss is stored for a predeterminable number of water depths and draughts of the motor vessel as a function of the expected setpoint speed and is read out and displayed as a calculation of the expected speed loss.

3. Method according to claim 1, **characterised in that**, to calculate the expected speed loss, operation-specific data of the vessel containing the current draught, water depth, current speed and vessel speed relative to the current, are continuously determined and taken into account.

4. Method according to any one of claims 1 to 3, **characterised in that** the setpoint speed in deep water, expected from the predetermined drive power, is determined from a propulsion curve of the motor vessel, stored in a database.

5. Method according to claim 1, **characterised in that**, to calculate the expected speed loss as a function of the determined water depth according to step b), the Froude depth number of the motor vessel, the ratio between the water depth and a wavelength determined at the bow of the motor vessel, the angle of the bow wave of the motor vessel and/or the ratio between draught and water depth of the motor vessel is determined.

6. Method according to any one of claims 1 to 5, **characterised in that** the speed of the motor vessel is automatically regulated as a function of the water depth, wherein the required power difference is minimized.

7. Method according to any one of claims 1 to 6, **characterised in that** the position of the motor vessel is determined and current and water depth profiles are read from a provided electronic map, and a course of the motor vessel is calculated in which the expected speed loss is minimized or a speed profile with a minimized necessary power difference over a predetermined course and a predetermined travel time is calculated.

## Revendications

1. Procédé pour l'évaluation de l'influence d'eau peu profonde sur un bateau à moteur propulsé par une puissance de propulsion, comprenant la succession continue des étapes :
a) détermination de la profondeur d'eau adjacente au bateau à moteur et d'une vitesse cible attendue en eau profonde à partir de la puissance de propulsion préétablie ;
b) calcul de la perte attendue de vitesse par rapport à la vitesse cible en fonction de la profondeur d'eau déterminée ;
c) détermination de la différence de puissance requise de la puissance de propulsion, qui est requise pour la compensation de la perte attendue de vitesse ;
d) affichage sur un dispositif d'affichage de la perte attendue de vitesse et de la différence de puissance requise, dans lequel le rapport de la différence de puissance requise à la perte attendue de vitesse est calculé et comparé à une valeur limite pouvant être préétablie et lorsque la valeur limite pouvant être préétablie n'est pas atteinte, la puissance de propulsion du bateau à moteur et/ou sa vitesse peu(ven)t être augmentée(s) et lorsque la valeur limite pouvant être préétablie est excédée, l'augmentation de la puissance de propulsion et/ou de la vitesse est empêchée.

2. Procédé selon la revendication 1, **caractérisé en ce qu'**est fournie une base de données dans laquelle, pour un nombre préalablement déterminable de profondeurs d'eau et de tirants d'eau du bateau à moteur, la perte attendue de vitesse en fonction de la vitesse cible attendue est mise en mémoire et lue et affichée en tant que calcul de la perte attendue de vitesse.

3. Procédé selon la revendication 1, **caractérisé en ce que**, pour le calcul de la perte attendue de vitesse, des données spécifiques à l'exploitation du navire, comportant le tirant d'eau actuel, la profondeur d'eau, la vitesse du courant et la vitesse du navire par rapport au courant, sont déterminées en continu et prises en compte.

4. Procédé selon l'une quelconque des revendications 1 à 3, **caractérisé en ce que** la vitesse cible en eau profonde attendue à partir de la puissance de propulsion préétablie est déterminée à partir d'une courbe de propulsion du bateau à moteur enregistrée dans une base de données.

5. Procédé selon la revendication 1, **caractérisé en ce que**, pour le calcul de la perte attendue de vitesse en fonction de la profondeur d'eau déterminée selon l'étape b), sont déterminés le coefficient de profondeur de Froude du bateau à moteur, le rapport entre la profondeur d'eau et une longueur de vague déterminée à l'étrave du bateau à moteur, l'angle de la vague d'étrave du bateau à moteur et/ou le rapport entre le tirant d'eau et la profondeur d'eau du bateau à moteur.

6. Procédé selon l'une quelconque des revendications 1 à 5, **caractérisé en ce que** la vitesse du bateau à moteur est réglée automatiquement en fonction de la profondeur d'eau, dans lequel la différence nécessaire de puissance est réduite au minimum.

7. Procédé selon l'une quelconque des revendications 1 à 6, **caractérisé en ce que** la position du bateau à moteur est déterminée et des profils de courant et de profondeur d'eau sont lus à partir d'une carte électronique fournie et est calculée une route du bateau à moteur sur laquelle la perte attendue de vitesse est réduite au minimum ou est calculé un profil de vitesse avec une différence minimisée de puissance requise sur une route préétablie et avec une durée de parcours préétablie.
